# EUROPÄISCHE PATENTSCHRIFT

(11) **EP 2 089 955 B1**
(45) Veröffentlichungstag und Bekanntmachung des Hinweises auf die Patenterteilung: **16.03.2016**
(21) Anmeldenummer: 07820259.5
(22) Anmeldetag: 17.09.2007
(51) Int. Cl.: H02K 5/20, H02K 9/28

(54) **GEBLÄSEVORRICHTUNG**
BLOWER APPARATUS
SOUFFLANTE

(30) Priorität: 09.11.2006 DE 102006052812
(43) Veröffentlichungstag der Anmeldung: 19.08.2009
(73) Patentinhaber: Robert Bosch GmbH, 70442 Stuttgart (DE)
(72) Erfinder: SCHIEL, Andreas, 76593 Gernsbach-Lautenbach (DE)
(86) Internationale Anmeldenummer: PCT/EP2007/059792
(87) Internationale Veröffentlichungsnummer: WO 2008/055734

(56) Entgegenhaltungen:
- DE-A1- 2 506 184
- DE-A1- 10 244 877
- DE-A1- 19 950 126
- DE-C- 853 474
- DE-U1- 9 303 161
- FR-A- 2 335 984

## Beschreibung

### Stand der Technik

Die Erfindung geht aus von Gebläsevorrichtung mit einem ein Gebläselaufrad antreibenden Elektromotor, der in einem Motorgehäuse angeordnet ist und einen Kommutator mit mindestens zwei Bürsten aufweist, die zum Kommutator jeweils eine zugehörige Bürstenanlagefläche ausbilden, wobei von einem vom Gebläselaufrad erzeugten Gebläseluftstrom ein Kühlluftstrom zur Kühlung des Elektromotors in einen Kühlluftkanal des Motorgehäuses abgeleitet wird.

Diese Gebläsevorrichtungen sind fertig montierte Einheiten aus einem Gebläsemotor, vorzugsweise einem Gleichstrommotor, in einem Motorgehäuse mit oder ohne Halteflansch und einem an einem Motorwellenstumpf angeordneten Gebläselaufrad sowie einer integrierten Motorsteuerung, wobei alle Komponenten technisch aufeinander abgestimmt sind.

Diese Gebläsevorrichtungen werden beispielsweise in Heizungs-, Lüftungs- und Klimasystemen von Kraftfahrzeugen etwa zur Klimatisierung des Fahrzeuginnenraumes verwendet, wobei sie angepasst an die unterschiedlichsten kunden- und applikationsspezifischen Anforderungen in verschiedenen Modulen konfiguriert werden. Dabei verlangt die Entwicklung in der Fahrzeugtechnik immer kleinere Module mit hoher Gebläseleistung.

Bei derartigen Gebläsevorrichtungen werden zur Kühlung des Elektromotors Kühlluftkanäle verwendet, die in das Motorgehäuse integriert sind. Üblicherweise wird ein Kühlluftstrom für die Motorkühlung intern aus dem vom Gebläselaufrad erzeugten Gebläseluftstrom abgezweigt und mittels des Kühlluftkanals an den Motor geführt. Dieser führt den Kühlluftstrom auf einen zentralen Punkt auf den Motor, um von da ausgehend die thermisch belasteten Bauteile des Motors, wie die Bürsten des Kommutators, die Lager und den Magnetkreis gleichermaßen zu umströmen und damit zu kühlen.

Um die notwendige Motorkühlung zu erreichen, wird in den gattungsgemäßen Gebläsevorrichtungen eine umfangreiche Menge an Kühlluftstrom benötigt, die vom Gebläseluftstrom abgezweigt werden muss. Das erfordert einerseits einen großen Kühlluftkanal, der den Bestrebungen nach Platzeinsparung entgegensteht. Zum anderen beeinflusst der abgezweigte Kühlluftstrom den Druckverlust in der Gebläsevorrichtung nachteilig und mindert letztlich die Gebläseleistung.

Aus dem Dokument DE 102 44 877 A1 ist eine Motorgebläseeinheit bekannt, die Merkmale des kennzeichnenden Teils des Anspruchs 1 umfasst.

Aufgabe der Erfindung ist es daher, die Motorkühlung, insbesondere die Kühlung der Bürstenanlageflächen bzw. der Bürsten der gattungsgemäßen Gebläsevorrichtung effizienter zu gestalten.

### Offenbarung der Erfindung

Die Aufgabe wird mit einer Gebläsevorrichtung gemäß den Merkmalen des Anspruchs 1 gelöst.

Dabei geht die Erfindung von der Erkenntnis aus, dass die kritischsten Stellen im Gleichstrommotor aus thermischer Sicht die Bürsten des Kommutators sind, welche also den größten Anteil an der entwickelten Motorwärme haben. Die Wicklung des Rotors wird über die Bürsten (Kontakte) des Kommutators mit der elektrischen Einspeisung verbunden. Die Bürstenanlageflächen der Bürsten liegen im direkten Kontakt an der Rotorwicklung an und schleifen bei der Drehung des Rotors über die Rotorwicklung, während der Kommutator ständig die Polung der Rotorwicklung wechselt. Die Bürsten bestehen aus einem gut elektrisch leitenden Material und reiben sich im Betrieb ab. Infolge der Reibung werden die Bürstenanlageflächen, insbesondere bei hohen Drehzahlen, wie sie bei den Motoren für den Gebläseantrieb vorkommen, besonders heiß. Nach der erfindungsgemäßen Ausführung des Kühlluftkanals werden die Bürstenanlageflächen gezielt und gleichmäßig mittels der gerichteten Kühlluft-Teilströme angeströmt. Die konzentrierte Zuführung der Kühlluft-Teilströme zu den Bürsten, die die größte Temperaturdifferenz zum Kühlluftstrom aufweisen, sorgt für eine besonders gute Wärmeübertragung. Somit wird die dort entstehende Motorwärme besser abgeführt, was es ermöglicht, den hierfür genutzten Kühlluftstrom zu reduzieren. In dieser Weise wird folglich die Motorkühlung sehr effizient gestaltet.

Besonders vorteilhaft ist, dass die zur Strömungsrichtung abgewinkelten Leitflanken jeweils einen Kühlluft-Teilstrom gebündelt und um 90° in eine Strömungsrichtung, die im Wesentlichen parallel zu einer Rotorachse des Elektromotors verläuft, derart umlenken, dass der jeweilige Kühlluft-Teilstrom von oben auf jeweils eine der Bürstenanlageflächen gerichtet ist.

Ferner ist vorteilhaft, dass der Abschluss tropfenförmig ausgestaltet ist und sich der Kühlluftkanal zum Abschluss hin entlang der Strömungsrichtung allmählich aufweitet.

Vorteilhaft ist, dass der Kühlluftkanal einen ersten Abschnitt und einen zweiten Abschnitt aufweist, wobei der erste Abschnitt im Motorgehäuse und der zweite Abschnitt auf der Innenseite des Gehäusedeckels derart angeordnet sind, dass der zweite Abschnitt im geschlossenen Zustand des Gehäusedeckels rechtwinklig zum ersten Abschnitt verläuft.

Es ist als vorteilhaft anzusehen, dass der zweite Abschnitt des Kühlkanals dreiseitig vom Gehäusedeckel gebildet und auf einer dem Kommutator zugewandten Kanalseite offen ist.

Vorteilhaft ist, dass der Abschluss des Kühlkanals einen Mittelpunkt des Gehäusedeckels einschließt, der im geschlossenen Zustand des Motorgehäuses auf einer Rotorachse des Elektromotors liegt.

Vorteilhaft ist, dass der Luftverteiler den Kühlluftstrom im zweiten Abschnitt des Kühlluftkanals vor Erreichen des Mittelpunktes in die zwei Kühlluft-Teilströme aufteilt, so dass der Kühlluftstrom nicht an einem zentralen Punkt auf den Gleichstrommotor geführt wird.

Besonders gezielt erfolgt die Führung der Kühlluft-Teilströme, wenn der Kühlluftkanal in Strömungsrichtung dem Luftverteiler nachfolgend mindestens zwei Leitflanken aufweist, mittels derer je ein Kühlluft-Teilstrom in Richtung auf die Bürstenanlageflächen lenkbar ist. Hiermit kann der Kühlluft -Teilstrom aus einer durch die Lage des Kühlluftkanals beliebig vorgegebenen Strömungsrichtung umgelenkt und kompakt gebündelt auf die Bürstenanlagefläche ausgerichtet werden.

Vorzugsweise sind der Kühlluftkanal, der Luftverteiler und/oder die Leitflanken zumindest teilweise in einem Gehäusedeckel des Motorgehäuses angeordnet. Da der Gehäusedeckel des Motorgehäuses üblicherweise im Bereich des Kommutators angeordnet ist, kann hiermit der konstruktive Aufwand, z.B. hinsichtlich der erforderlichen Kanallänge des Kühlluftkanals zum Erreichen der Bürsten des Kommutators, minimiert werden.

Ist zudem der Gehäusedeckel lösbar mit dem Motorgehäuse verbunden, kann der Gehäusedeckel mit dem integrierten Kühlluftkanal leicht ausgetauscht werden. Bei variabler Ausgestaltung des Gehäusedeckels, beispielsweise hinsichtlich der Größe und der Form des integrierten Kühlluftkanals, kann dieser Gehäusedeckel mit dem Kühlluftkanal modular für die verschiedenen Applikationen des in der Gebläsevorrichtung vorgesehenen Elektromotors konfiguriert und eingesetzt werden.

Der konstruktive Aufwand für den Kühlluftkanal minimiert sich weiter, wenn der Kühlluftkanal dreiseitig vom Gehäusedeckel gebildet und an einer dem Kommutator zugewandten Kanalseite offen ausgebildet ist. Nur ein geringer Teil des Kühlluftstromes bzw. der Kühlluft-Teilströme löst sich hierbei von der Hauptströmungsrichtung entlang des dreiseitig geschlossenen Kühlluftkanals und wird dem Motorgehäuse zur Kühlung des Motors großflächig zugeführt. Der Großteil des Kühlluftstromes wird erfindungsgemäß durch den Luftverteiler aufgeteilt und die Kühlluft-Teilströme anschließend durch die Leitflanken gezielt abgelenkt.

### Kurze Beschreibung der Zeichnungen

Die erfindungsgemäße Gebläsevorrichtung wird nachfolgend anhand eines Ausführungsbeispiels näher erläutert, das ergänzend in den zugehörigen Zeichnungen schematisch dargestellt ist. Es zeigen:
- Fig. 1: eine Draufsicht auf die Innenseite eines lösbaren Gehäusedeckel des Motorgehäuses der erfindungsgemäßen Gebläsevorrichtung
- Fig. 2: einen auszugsweisen Längsschnitt durch das geschlossene Motorgehäuse der erfindungsgemäßen Gebläsevorrichtung

### Ausführungsform(en) der Erfindung

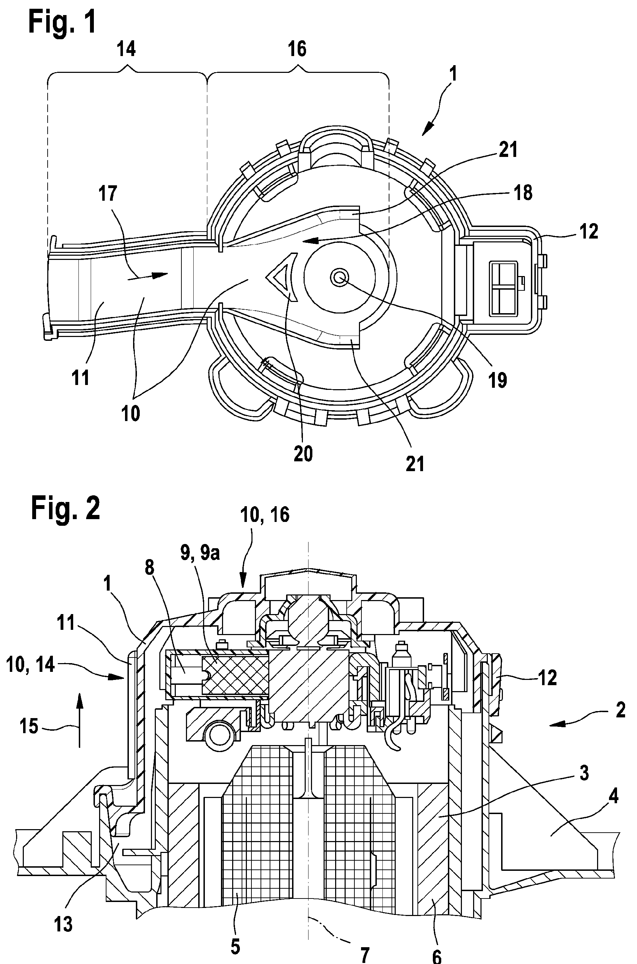

Fig. 1 zeigt den Gehäusedeckel 1 des in Fig. 2 ersichtlichen Motorgehäuses 2 der erfindungsgemäßen Gebläsevorrichtung in einer vom Motorgehäuse 2 abgelösten Position, in der auf eine Innenseite des Gehäusedeckels 1 Einsicht genommen werden kann. (Der Gehäusedeckel 1 ist gegenüber den Abmaßen des Motorgehäuses 2 etwas verkleinert dargestellt).
Aus dem auszugsweisen Längsschnitt durch das Motorgehäuse 2 der erfindungsgemäßen Gebläsevorrichtung nach Fig. 2 ist das mit dem Gehäusedeckel 1 nach Fig. 1 verschlossene Motorgehäuse 2 ersichtlich. Die Schnittdarstellung zeigt einen Teil des Motorgehäuses 2 mit einem darin befindlichen Gleichstrommotor 3, der ein Gebläselaufrad antreibt. Das Gebläselaufrad ist, weil für die Erfindungsdarstellung entbehrlich, nicht dargestellt. Am äußeren Umfang des Motorgehäuses 2 verfügt die Gebläsevorrichtung über einen Halteflansch 4 zur Befestigung der Gebläsevorrichtung in einer nicht gezeigten Lüftungsanlage. Der Gleichstrommotor 3 verfügt über einen Rotor 5, der von einem Stator 6 umgeben, um eine Rotorachse 7 dreht. In Verlängerung der Rotorachse 7, dem Gehäusedeckel 1 zugewandt ist ein Kommutator 8 mit zwei paarweise sich gegenüberliegenden Bürsten 9 mit den ausgebildeten Bürstenanlageflächen 9a angeordnet. In dieser Schnittdarstellung ebenfalls nicht dargestellt, ist ein Wellenstumpf des Rotors 5, welcher aus dem Motorgehäuse 2, in Verlängerung der Rotorachse 7 und dem Gehäusedeckel 1 abgewandt, herausragt. Mit diesem Wellenstumpf ist das Gebläselaufrad verbunden.

Im Gehäusedeckel 1 nach Fig. 1 ist ein Kühlluftkanal 10 integriert. (sichtbar in Fig. 2). Der Gehäusedeckel 1 weist zwei sich gegenüberliegende Befestigungslaschen 11,12 auf, mittels derer der Gehäusedeckel 1 im verschlossenen Zustand am Motorgehäuse 2 befestigt wird. Dabei sind die Befestigungslaschen 11,12 biegsam und formen sich zur Befestigung des Gehäusedeckels 1 an die Außenkontur des Motorgehäuses 2 an. Eine der Befestigungslaschen 11 ist längserstreckt und bildet im geschlossenen Zustand des Motorgehäuses 2 gemeinsam mit einer Außenkontur des Motorgehäuses 2 eine Zuluftöffnung 13 mit einem ersten Abschnitt 14 des Kühlkanals 10 aus, mit Hilfe dessen der Kühlluftstrom vom Gebläseluftstrom abgezweigt und dem Motorgehäuse 2 zugeleitet wird. Der Richtungspfeil in Fig. 2 zeigt die Strömungsrichtung 15 des abgezweigten Kühlluftstromes im ersten Abschnitt 14 des Kühlkanals 10 an. Ein zweiter, in Strömungsrichtung 15 nachfolgender Abschnitt 16 des Kühlkanals 10 ist auf der Innenseite des Gehäusedeckels 1 ausgeformt und verläuft im geschlossenen Zustand des Motorgehäuses 2 rechtwinklig zum ersten Abschnitt 14 und damit rechtwinklig zur Rotorachse 7. Dieser zweite Abschnitt 16 des Kühlluftkanals 10 wird dreiseitig vom Gehäusedeckel 1 gebildet und ist auf einer dem Kommutator 8 zugewandten Kanalseite offen. Entlang einer Strömungsrichtung 17 des Kühlluftstromes im zweiten Abschnitt 16 des Kühlluftkanals 10 weitet sich der dreiseitige Kühlluftkanal 10 allmählich auf und endet mit einem tropfenförmigen Abschluss 18, wobei er einen Mittelpunkt 19 des Gehäusedeckels 1 einschließt, der im geschlossenen Zustand des Motorgehäuses 2 auf der Rotorachse 7 liegt.

Ein Luftverteiler 20 im zweiten Abschnitt 16 des Kühlluftkanals 10 teilt den Kühlluftstrom vor Erreichen des Mittelpunktes 19 des Gehäusedeckels 1 in zwei Kühlluft-Teilströme auf, so dass der Kühlluftstrom nicht an einen zentralen Punkt auf den Gleichstrommotor geführt, sondern aufgeteilt den paarweise sich gegenüberliegenden Bürsten 9 des Kommutators 8 mit den Bürstenanlageflächen 9a direkt und gerichtet zugeführt wird. Zwei zur Strömungsrichtung 17 abgewinkelte Leitflanken 21 leiten jeweils einen Kühlluft-Teilstrom gezielt auf die Bürstenanlagefläche 9a der Bürsten 9. Mit Hilfe dieser Leitflanken 21 wird der jeweilige Kühlluft-Teilstrom gebündelt und in eine Strömungsrichtung, die im Wesentlichen parallel zur Rotorachse 7 verläuft, um ca. 90° umgelenkt. Somit wird der jeweilige Kühlluft-Teilstrom direkt von oben und konzentriert auf jeweils eine der Bürstenanlageflächen 9a gerichtet.
Diese Ausgestaltungen des Kühlluftkanals 10 erzielen die vorbeschriebenen vorteilhaften Wirkungen.

## Patentansprüche

1. Gebläsevorrichtung mit einem ein Gebläselaufrad antreibenden Elektromotor (3), der in einem Motorgehäuse (2) angeordnet ist und einen Kommutator (8) mit mindestens zwei Bürsten (9) aufweist, die zum Kommutator (8) jeweils eine zugehörige Bürstenanlagefläche (9a) ausbilden, wobei von einem vom Gebläselaufrad erzeugten Gebläseluftstrom ein Kühlluftstrom zur Kühlung des Elektromotors (3) in einen Kühlluftkanal (10) des Motorgehäuses (2) abgeleitet wird, und wobei der Kühlluftkanal (10) einen Luftverteiler (20) aufweist, der den Kühlluftstrom in mindestens zwei Kühlluft-Teilströme aufteilt, **dadurch gekennzeichnet, dass** der Kühlluftkanal (10) in einem Abschluss (18) eines Gehäusedeckels (1) des Motorgehäuses (2) mit zwei zur Strömungsrichtung (17) des Kühlluftstroms abgewinkelten Leitflanken (21) endet, wobei die durch den Luftverteiler (20) aufgeteilten Kühlluft-Teilströme durch die abgewinkelten Leitflanken (21) des Abschlusses (18) jeweils einer der Bürstenanlageflächen (9a) direkt und gerichtet zugeführt sind.

2. Gebläsevorrichtung nach Anspruch 1, **dadurch gekennzeichnet, dass** die zur Strömungsrichtung (17) abgewinkelten Leitflanken (21) jeweils einen Kühlluft-Teilstrom gebündelt und um 90° in eine Strömungsrichtung, die im Wesentlichen parallel zu einer Rotorachse (7) des Elektromotors (3) verläuft, derart umlenken, dass der jeweilige Kühlluft-Teilstrom von oben auf jeweils eine der Bürstenanlageflächen (9a) gerichtet ist.

3. Gebläsevorrichtung nach Anspruch 1, **dadurch gekennzeichnet, dass** der Abschluss (18) tropfenförmig ausgestaltet ist und sich der Kühlluftkanal (10) zum Abschluss (18 ) hin entlang der Strömungsrichtung (17) allmählich aufweitet.

4. Gebläsevorrichtung nach einem der vorhergehenden Ansprüche, **dadurch gekennzeichnet, dass** der Kühlluftkanal (10) einen ersten Abschnitt (14) und einen zweiten Abschnitt (16) aufweist, wobei der erste Abschnitt (14) im Motorgehäuse (2) und der zweite Abschnitt (16) auf der Innenseite des Gehäusedeckels (1) derart angeordnet sind, dass der zweite Abschnitt (16) im geschlossenen Zustand des Gehäusedeckels (1) rechtwinklig zum ersten Abschnitt (14) verläuft.

5. Gebläsevorrichtung nach Anspruch 4, **dadurch gekennzeichnet, dass** der zweite Abschnitt (16) des Kühlkanals (10) dreiseitig vom Gehäusedeckel (1) gebildet und auf einer dem Kommutator (8) zugewandten Kanalseite offen ist.

6. Gebbläsevorrichtung nach einem der vorhergehenden Ansprüche 1 bis 3, **dadurch gekennzeichnet, dass** der Abschluss (18) des Kühlkanals (10) einen Mittelpunkt (19) des Gehäusedeckels (1) einschließt, der im geschlossenen Zustand des Motorgehäuses (2) auf einer Rotorachse (7) des Elektromotors (3) liegt.

7. Gebläsevorrichtung nach Anspruch 6, **dadurch gekennzeichnet, dass** der Luftverteiler (20) den Kühlluftstrom im zweiten Abschnitt (16) des Kühlluftkanals (10) vor Erreichen des Mittelpunktes (19) in die zwei Kühlluft-Teilströme aufteilt, so dass der Kühlluftstrom nicht an einem zentralen Punkt auf den Gleichstrommotor geführt wird.

## Claims

1. Blower apparatus having an electric motor (3) which drives a blower impeller wheel and arranged in a motor housing (2) and has a commutator (8) with at least two brushes (9) which each form an associated brush bearing face (9a) for the commutator (8), wherein a cooling air stream for cooling the electric motor (3) is diverted into a cooling air duct (10) of the motor housing (2) from a blower air stream generated by the blower impeller wheel, and wherein the cooling air duct (10) has an air distributor (20) which divides the cooling air stream into at least two cooling air partial streams, **characterized in that** the cooling air duct (10) ends in a termination (18) of a housing cover (1) of the motor housing (2) with two guiding edges (21) which are positioned at an angle with respect to the direction (17) of flow of the cooling air stream, wherein the cooling air partial streams which are divided by the air distributor (20) are each fed directly and in a directed fashion to one of the brush bearing faces (9a) in each case by means of the guiding edges (21), positioned at an angle, of the termination (18).

2. Blower device according to Claim 1, **characterized in that** the guiding edges (21) which are positioned at an angle with respect to the direction (17) of flow each divert a concentrated cooling air partial stream through 90° into a direction of flow which runs essentially parallel with respect to a rotor axis (7) of the electric motor (3), in such a way that the respective cooling air partial stream is directed from above and to in each case one of the brush bearing faces (9a).

3. Blower device according to Claim 1, **characterized in that** the termination (18) is configured to a tear shape, and the cooling air duct (10) gradually widens towards the termination (18) in the direction (17) of flow.

4. Blower device according to one of the preceding claims, **characterized in that** the cooling air duct (10) has a first section (14) and a second section (16), wherein the first section (14) is arranged in the motor housing (2), and the second section (16) is arranged on the inner side of the housing cover (1), in such a way that in the closed state of the housing cover (1) the second section (16) runs at a right angle to the first section (14).

5. Blower device according to Claim 4, **characterized in that** the second section (16) of the cooling duct (10) is formed on three sides by the housing cover (1) and is open on the duct side facing the commutator (8).

6. Blower device according to one of the preceding Claims 1 to 3, **characterized in that** the termination (18) of the cooling duct (10) encloses a centre point (19) of the housing cover (1) which, in the closed state of the motor housing (2) lies on a rotor axis (7) of the electric motor (3) .

7. Blower device according to Claim 6, **characterized in that** the air distributor (20) divides the cooling air stream in the second section (16) of the cooling air duct (10) into the two cooling air partial streams before the centre point (19) is reached, with the result that the cooling air stream is not directed onto the DC motor at a central point.

## Revendications

1. Soufflante avec un moteur électrique (3) entraînant un rotor de soufflante qui est disposé dans un bâti de moteur (2) et comporte un commutateur (8) avec au moins deux balais (9) qui constituent pour le commutateur (8) respectivement une surface d'appui de balais correspondante (9a), pour laquelle un flux d'air de refroidissement est dévié, par un flux d'air de soufflante produit par le rotor de soufflante, dans un conduit d'air de refroidissement (10) du bâti de moteur (2) pour refroidir le moteur électrique (3) et pour laquelle le conduit d'air de refroidissement (10) comporte un diffuseur d'air (20) qui divise le flux d'air de refroidissement en au moins deux flux partiels d'air de refroidissement **caractérisée en ce que** le conduit d'air de refroidissement (10) aboutit dans une terminaison (18) d'un couvercle de bâti (1) du bâti de moteur (2) avec deux flancs directeurs (21) recourbés en direction de l'écoulement (17) du flux d'air de refroidissement, pour laquelle les flux partiels d'air de refroidissement divisés par le diffuseur d'air (20) sont acheminés par les flancs directeurs (21) recourbés de la fermeture (18) directement et de façon orientée, respectivement à une des surfaces d'appui de balais (9a).

2. Soufflante selon la revendication 1 **caractérisée en ce que** les flancs directeurs (21) recourbés en direction de l'écoulement (17) dévient respectivement un flux partiel d'air de refroidissement en faisceau et de 90° dans une direction d'écoulement, passant pour l'essentiel parallèlement à un axe de rotor (7) du moteur électrique (3), de telle sorte que le flux partiel d'air de refroidissement correspondant est respectivement dirigé d'en haut sur une des surfaces d'appui des balais (9a).

3. Soufflante selon la revendication 1 **caractérisée en ce que** la terminaison (18) est constituée en forme de goutte et le conduit d'air de refroidissement (10) s'élargit progressivement vers la terminaison (18) le long de la direction de l'écoulement (17).

4. Soufflante selon l'une quelconque des revendications précédentes **caractérisée en ce que** le conduit d'air de refroidissement (10) comporte un premier tronçon (14) et un deuxième tronçon (16), pour laquelle le premier tronçon (14) est disposé dans le bâti du moteur (2) et le deuxième tronçon (16) sur le côté intérieur du couvercle de bâti (1) de telle sorte que le deuxième tronçon (16) passe à l'état fermé du couvercle de bâti (1) à angle droit par rapport au premier tronçon (14).

5. Soufflante selon la revendication 4 **caractérisée en ce que** le deuxième tronçon (16) du conduit de refroidissement (10) est formé de façon triangulaire par le couvercle de bâti (1) et est ouvert sur un côté du conduit tourné vers le commutateur (8).

6. Soufflante selon l'une quelconque des revendications 1 à 3 **caractérisée en ce que** la terminaison (18) du conduit de refroidissement (10) comprend un point central (19) du couvercle de bâti (1) qui se situe à l'état fermé du bâti de moteur (2) sur un axe de rotor (7) du moteur électrique (3).

7. Soufflante selon la revendication 6 **caractérisée en ce que** le diffuseur d'air (20) divise le flux d'air de refroidissement dans le deuxième tronçon (16) du conduit d'air de refroidissement (10) avant d'atteindre le point central (19) en deux flux partiels d'air de refroidissement de sorte que le flux d'air de refroidissement n'est pas dirigé sur un point central sur le moteur à courant continu.
